# EUROPÄISCHE PATENTSCHRIFT

(11) **EP 1 248 009 B1**
(45) Veröffentlichungstag und Bekanntmachung des Hinweises auf die Patenterteilung: **08.11.2006**
(21) Anmeldenummer: 02005713.9
(22) Anmeldetag: 13.03.2002
(51) Int. Cl.: F16D 65/12, F16D 66/02

(54) **Vorrichtung zur Anzeige der Gesamtbelastung bei Bremsscheiben aus C-Faser verstärkter Keramik**
Device for indicating the total load of a brake disc made of carbon fibre reinforced ceramics
Dispositif indicateur de la charge totale d'un disque de frein céramique renforcé par des fibres de carbone

(30) Priorität: 04.04.2001 DE 10116661
(43) Veröffentlichungstag der Anmeldung: 09.10.2002
(73) Patentinhaber: Dr.Ing. h.c.F. Porsche Aktiengesellschaft, 70435 Stuttgart (DE)
(72) Erfinder: Martin, Roland, 73432 Aalen (DE)

(56) Entgegenhaltungen:
- EP-A- 0 926 111
- EP-A- 1 052 422

## Beschreibung

Die Erfindung betrifft eine Vorrichtung zur Anzeige der Gesamtbelastung bei Bremsscheiben aus kohlenstoffaser-verstärkter Keramik.

Derartige Bremsscheiben sind bereits aus der DE 44 38 455 C1 sowie der DE 198 34 542 A1 bekannt. Die DE 44 38 455 C1 zeigt ein Verfahren zur Herstellung einer Reibeinheit, bei der ein poröser Kohlenstoffkörper mit flüssigem Silizium infiltriert wird. Hierbei wandelt sich das Silizium mit dem Kohlenstoff zu Siliziumkarbid SiC um. Der Kohlenstoffkörper ist vorzugsweise als Kohlenstoffaserkörper ausgeführt. Wird die Radeinheit, hier eine Bremsscheibe, aus zwei Hälften zusammengesetzt, so können vor der Keramisierung in die Kohlenstoffkörper Ausnehmungen eingebracht werden, die sich durch das Zusammensetzen der Kohlenstoffkörper dann zu einem gemeinsamen Hohlraum, beispielsweise einem Kühlkanal, ergänzen. Die DE 198 43 542 A1 offenbart ebenfalls ein Verfahren zur Herstellung von Körpern, die Verstärkungsfasern enthalten. Im Unterschied zur DE 44 38 455 C1 werden Fasern, Faserbündel oder Faseraglumerate verwendet und so ausgerichtet, daß die Verstärkungsfasern im Bereich der Ausnehmungen in der Bremsscheibe in etwa parallel zu den Seitenkanten der Ausnehmungen orientiert sind.

Die bekannten faserverstärkten Keramik-Werkstoffe erfahren durch hohe Belastungen eine fortschreitende Gesamtbelastung im Sinne einer Schädigung, wobei aber nach außen keine Merkmale der Schädigung sichtbar werden. Insbesondere ist es nicht möglich, wie bei bekannten Bremsscheiben aus Eisen-Werkstoffen, die Gesamtbelastung anhand des Materialabtrages zu erfassen. Dieser beträgt bei Bremsscheiben aus faserverstärkter Keramik nur wenige Gramm und ist überdies kein Indikator für eine Schädigung der Bremsscheibe.

Ausgehend von diesem Stand der Technik ist es Aufgabe der Erfindung, eine Vorrichtung zur Anzeige der Gesamtbelastung zu schaffen, die für Bremsscheiben und andere Reibelemente aus kohlenstoffaser-verstärkter Keramik einsetzbar ist.

Diese Aufgabe wird erfindungsgemäß mit den Merkmalen des Patentanspruches 1 gelöst. Erfindungsgemäß wird vorgeschlagen, in der Bremsscheibe ausgehend von der Reibfläche ein Indikatorelement vorzusehen, dessen Oxidationsbeständigkeit gegenüber dem Werkstoff der Bremsscheibe vermindert ist. Der Erfindung liegt dabei die Erkenntnis zugrunde, daß bei dem gattungsgemäßen Werkstoff für die Bremsscheibe eine Schädigung in erster Linie durch Oxidation der Kohlenstoffasern entsteht. Durch die gegenüber dem Werkstoff der Bremsscheibe verminderte Oxidationsbeständigkeit verschleißt das Indikatorelement deutlich schneller als der Bremsscheiben-Werkstoff, so daß der Abbrand des Indikatorelementes deutlich erkennbar und als Maß für die Gesamtbelastung der Bremsscheibe heranzuziehen ist.

Vorteilhafte Weiterbildungen der Erfindung sind in den Unteransprüchen beschrieben.

So wird vorgeschlagen, das Indikatorelement aus einem Kohlenstoff-Werkstoff herzustellen. Derartige Werkstoffe können beispielsweise Graphit, Presslinge aus Kohlenstoffaser, Kohlenstoff-Sinter-Werkstoffe oder organische Binder, wie sie für Bremsbeläge eingesetzt werden, sein. Diesen Werkstoffen ist gemeinsam, daß sie aus Kohlenstoff bestehen, so daß ihr Oxidationsverhalten in Abhängigkeit von der Temperatur dem Oxidationsverhalten der Kohlenstoffasern der Bremsscheibe entspricht. Bei organischen Werkstoffen besteht die Besonderheit, daß diese zunächst nicht aus reinem Kohlestoff bestehen. Während der ersten Erhitzungen durch Bremsvorgänge jedoch werden diese Werkstoffe durch Verkorkungen in Kohlenstoff umgesetzt, und ihr Oxidationsverhalten entspricht wieder dem einer Kohlenstoffaser.

Weiterhin wird vorgeschlagen, das Indikatorelement stiftförmig auszubilden und in eine Bohrung in der Bremsscheibe einzusetzen. Durch diese Ausbildung des Indikatorelementes ist dessen Herstellung und die Anordnung in der Bremsscheibe erheblich vereinfacht, da Stifte bzw. Bohrungen einfach und kostengünstig herzustellen sind. Von besonderem Vorteil ist diese Anordnung bei einer Bremsscheibe, die bereits mit Bohrungen versehen ist. Bei einer solchen Bremsscheibe kann eine der ohnehin vorhandenen Bohrungen zur Aufnahme des Indikatorelementes verwendet werden.

Schließlich wird vorgeschlagen, das Indikatorelement mit der Bremsscheibe durch eine siliziumkarbidhaltige Schicht zu verbinden. Dies geschieht vorzugsweise dadurch, daß das Indikatorelement vor dem Silizieren der Bremsscheibe in die Bremsscheibe eingebracht wird. Während des Silizierprozesses wird dann die Randschicht des Indikatorelementes mitsiliziert, so daß ohne weitere Verfahrensschritte eine Verbindungsschicht zwischen der Bremsscheibe und dem Indikatorelement entsteht. Es ist weiterhin möglich, das Indikatorelement nicht erst in den Kohlenstoff-Formkörper sondern bereits in dessen Vorstufe, den Grünling, einzubringen und zusammen mit dem Grünling zu karbonisieren. Insbesondere bei einem Indikatorelement aus einem organischen Werkstoff kann dieses Verfahren dazu verwendet werden, auch den organischen Werkstoff zu karbonisieren und somit einen definierten Zustand des Indikatorelementes herzustellen. Es ist darauf zu achten, daß das Indikatorelement nach dem Silizieren von einer etwaig vorhandenen, im Bereich der Reibfläche der Bremsscheibe liegenden Siliziumkarbidschicht befreit wird, um eine günstige Angriffsfläche für die Oxidation des Indikatorelementes zu schaffen.

Die Erfindung ist nachstehend anhand des in den Figuren dargestellten Ausfühungsbeispieles näher erläutert. Es zeigen:
- Fig. 1: eine Ansicht einer Bremsscheibe aus kohlenstoffaserverstärkter Keramik,
- Fig. 2: eine Detailansicht eines Indikatorelementes in der Bremsscheibe,
- Fig. 3: eine Seitenansicht der Bremsscheibe mit einem Indikatorelement,
- Fig. 4: einen Teil-Querschnitt durch eine Bremsscheibe mit einem Indikatorelement und
- Fig. 5a bis d: eine Darstellung des Schädiungsverlaufes des Indikatorelementes.

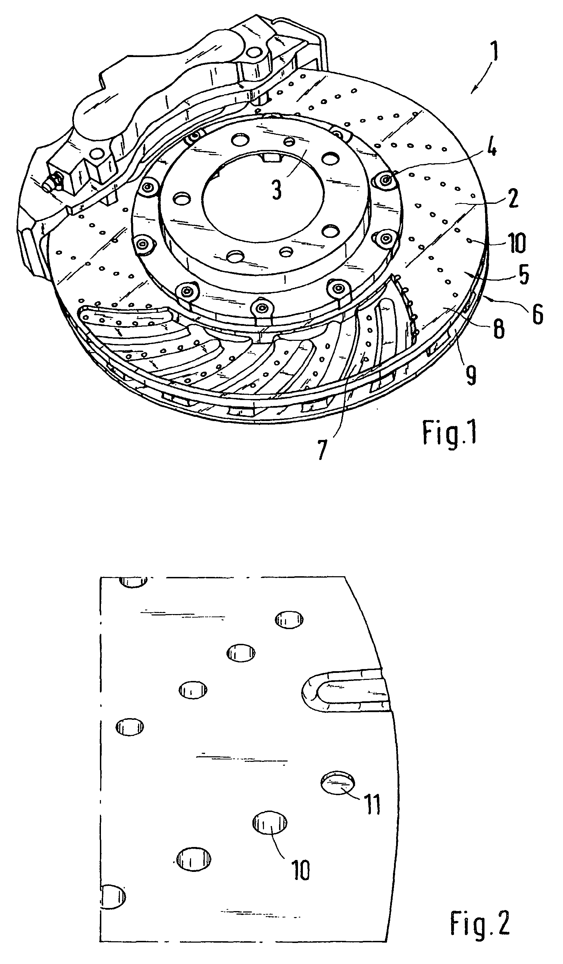

Die in Fig. 1 gezeigte Bremsscheibe 1 besteht aus einem Bremsring 2, der mit einem Topf 3 über Befestigungselemente 4 verbunden ist. Der Bremsring 2 ist aus zwei Hälften 5, 6 hergestellt, die im Verlauf des Herstellprozesses untrennbar miteinander verbunden werden. Der Bremsring 2 ist innenbelüftet ausgeführt und weist Kühlkanäle 7 zwischen Reibscheiben 8, 9 auf. Die Reibscheiben 8, 9 bilden an ihrer Außenseite die Reibflächen der Bremsscheibe 1. Die Reibscheiben 8, 9 sind im Bereich der Kühlkanäle 7 mit Bohrungen 10 versehen, die die Reibscheiben 8, 9 jeweils vollständig durchdringen.

Fig. 2 zeigt eine Ansicht auf einen Teil der Reibfläche einer der Reibscheiben 8, 9. In einer der Bohrungen 10 ist ein stiftförmiges Indikatorelement 11 angeordnet. Das Indikatorelement 11 ist stiftförmig ausgebildet und so bemessen, daß sein Außendurchmesser dem Durchmesser der Bohrungen 10 entspricht.

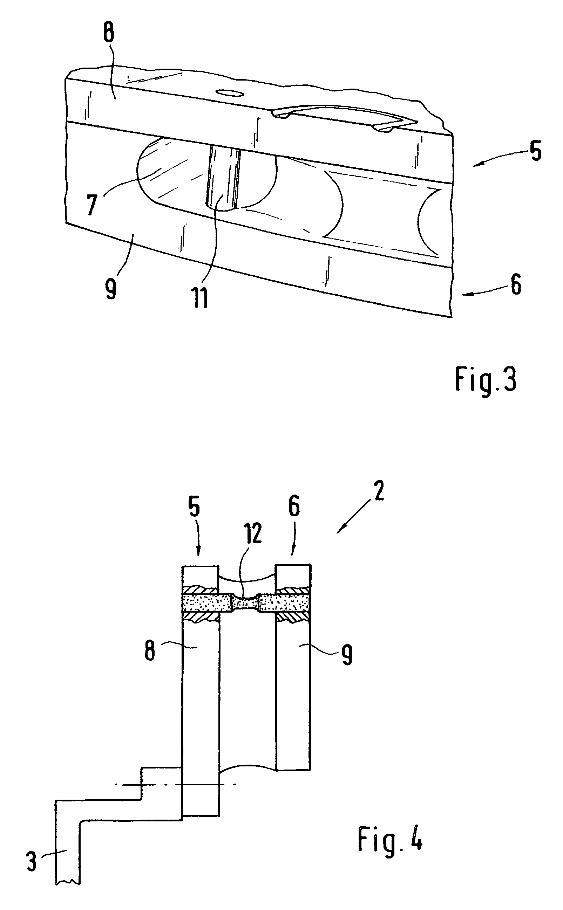

Wie in Fig. 3 zu erkennen ist, durchdringt das Indikatorelement 11 beide Reibscheiben 8, 9, so daß ein Teil des Indikatorelementes 11 frei im Kühlkanal 7 steht.

Der Querschnitt nach Fig. 4 durch die Bremsscheibe 1 zeigt nochmals die Lage des Indikatorelementes innerhalb der Bremsscheibe 1. Das Indikatorelement - hier ein Graphitstift - weist gegenüber der Ausführung nach Fig. 3 die Besonderheit auf, daß sein im Bereich des Kühlkanales 7 liegender mittlerer Bereich 12 abgedreht ist, um so die Menge des Materiales außerhalb der Reibscheiben 8, 9 zu vermindern.

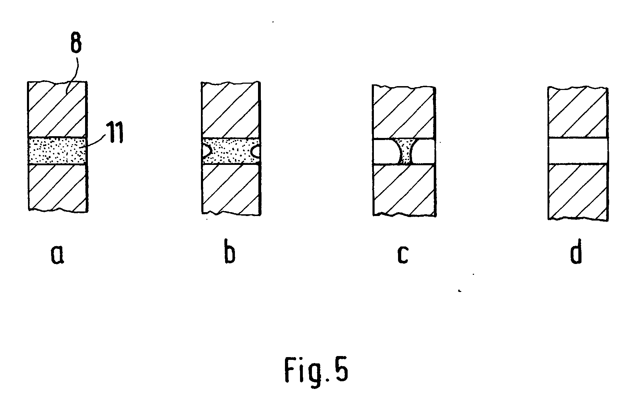

Fig. 5 zeigt den Schädigungsverlauf des Indikatorelementes 11 und damit die Funktion des Indikatorelementes 11 als Anzeigevorrichtung für die Gesamtbelastung der Bremsscheibe 1. Fig. 5a zeigt das Indikatorelement 11 ausschnittsweise im Bereich der Reibscheibe 8 im Neuzustand. In Fig. 5b ist zu erkennen, daß das Indikatorelement 11 erste Abbrandbereiche 12 aufweist. Diese Abbrandbereiche sind nach dem Abblasen der Bremsscheibe 1 mit Druckluft gut zu erkennen und beispielsweise mit Hilfe einer Tastnadel meßbar. Fig. 5c zeigt das Indikatorelement 11 im Zustand fortgeschrittener Schädigung. Die Abbrandbereiche 12 nehmen nun einen Großteil der Bohrung 10 ein. In Fig. 5d schließlich ist die Gesamtbelastung der Bremsscheibe 1 soweit fortgeschritten, daß das Indikatorelement 11 vollständig verschwunden ist.

Im vorliegenden Beispiel ist das Indikatorelement 11 so ausgelegt, daß sein vollständiger Abbrand wie in Fig. 5d dargestellt, ein Zeichen dafür ist, daß die Bremsscheibe 1 ihre zulässige Gesamtbelastung erreicht hat und ausgetauscht werden sollte. Die zulässige Gesamtbelastung ist dabei so zu wählen, daß mit einem Versagen der Bremsscheibe 1 auch bei weiterer Belastung der Bremsscheibe kurzfristig nicht zu rechnen ist.

Das Indikatorelement 11 kann alternativ auch so ausgelegt werden, daß eine bestimmte Tiefe des Abbrandes 12 das Erreichen der zulässigen Gesamtbelastung anzeigt.

## Patentansprüche

1. Vorrichtung zur Anzeige der Gesamtbelastung bei Bremsscheiben (1) aus C-Faser verstärkter Keramik, **dadurch gekennzeichnet, dass** in der Bremsscheibe (1) ausgehend von der Reibfläche ein Indikatorelement (11) vorgesehen ist, dessen Oxydationsbeständigkeit gegenüber dem Werkstoff der Bremsscheibe vermindert ist.

2. Vorrichtung nach Anspruch 1, **dadurch gekennzeichnet, dass** das Indikatorelement (11) aus einem Kohlenstoff-Werkstoff besteht.

3. Vorrichtung nach Anspruch 1 oder 2, **dadurch gekennzeichnet, dass** das Indikatorelement (11) stiftförmig ausgebildet und in eine Bohrung (10) in der Bremsscheibe eingesetzt ist.

4. Vorrichtung nach Anspruch 1, 2 oder 3, **dadurch gekennzeichnet, dass** das Indikatorelement (11) mit der Bremsscheibe (1) durch eine siliziumkarbidhaltige Schicht verbunden ist.

## Claims

1. A device for indicating the total load in brake discs (1) made of carbon-fibre-reinforced ceramic, **characterised in that** an indicator element (11), the oxidation resistance of which is reduced in relation to the material of the brake disc, is provided in the brake disc (1), starting from the friction surface.

2. A device according to claim 1, **characterised in that** the indicator element (11) is made of a carbon material.

3. A device according to claim 1 or 2, **characterised in that** the indicator element (11) is pin-shaped and is inserted into a bore (10) in the brake disc.

4. A device according to claim 1, 2 or 3, **characterised in that** the indicator element (11) is connected to the brake disc (1) by a silicon carbide-containing layer.

## Revendications

1. Dispositif pour l'indication de la charge totale de disques de frein (1) en céramique renforcée par des fibres de carbone, **caractérisé en ce qu'**il est prévu un élément indicateur (11) dans le disque de frein (1) partant de la surface de friction, dont la résistance à l'oxydation est réduite par rapport au matériau du disque de frein.

2. Dispositif selon la revendication 1, **caractérisé en ce que** l'élément indicateur (11) est constitué d'un matériau de carbone.

3. Dispositif selon la revendication 1 ou 2, **caractérisé en ce que** l'élément indicateur (11) est configuré en forme de broche et est inséré dans un alésage (10) dans le disque de frein.

4. Dispositif selon la revendication 1, 2 ou 3, **caractérisé en ce que** l'élément indicateur (11) est relié au disque de frein (1) par une couche contenant du carbure de silicium.
